# EUROPEAN PATENT APPLICATION

(11) **EP 3 477 768 A1**
(43) Date of publication of application: **01.05.2019**
(21) Application number: 17208097.0
(22) Date of filing: 18.12.2017
(51) Int. Cl.: H01Q 1/32, H01Q 1/06, B60Q 1/48, B60Q 1/00, F21S 43/239, F21S 43/245

(54) **VEHICLE LIGHT EMITTING ASSEMBLY**

(30) Priority: 24.10.2017 TW 106136434
(71) Applicant: Dayu Optoelectronics Co., Ltd., 320 Taoyuan City (TW)
(72) Inventor: Liao, Kuo-Hao, Zhongli Dist., Taoyuan City 320 (TW); Wang, Hsien-Jung, 320 Taoyuan City (TW); Chen, Yu-Chieh, 320 Taoyuan City (TW)
(74) Representative: Becker Kurig Straus

(57) **Abstract**

The present invention provides a vehicle light emitting assembly (1), the vehicle light emitting assembly (1) includes a plurality of light guide plates (10), each light guide plate (10) includes a light emitting surface (12), the plurality of light guide plates (10) being combined into a hollow pyramidal structure (11) and the hollow pyramidal structure (11) having a polygonal bottom surface shape (13), a shell structure (30) disposed outside the hollow pyramidal structure (11), and the shell structure (30) disposed on an outer surface of a vehicle (50), and at least one light source element (20) disposed at one terminal of the hollow pyramidal structures (11). The developed vehicle light emitting assembly (1) emits uniform light to enhance the visual effects, and has the advantages of easy production.

## Description

The present invention relates to a vehicle light emitting assembly according to the pre-characterizing clauses of claims 1.

An automobile is designed to have an antenna structure disposed on the roof of the automobile, to enhance the radio signals received by the car. However, the structure of the antenna on the roof is not beautiful enough and may sometimes conflict with the design of the car body. In addition, when the user forgets to retract the antenna when the vehicle enters or leaves the lower-ceiling garage, the antenna may be damaged or even broken.

In order to solve the above problem, the antenna is currently designed to be spirally curved and concealed inside a shark fin structure on the roof. The shark fin structure is usually similar in color to the roof color of the car, to enhance the beauty and fashion of the vehicle. However, current automobile shark fin structures have antenna or signal enhancement only, with no additional functionality.

In view of the above, the present invention improves the above-mentioned problem. A vehicle light emitting assembly structure is designed. In addition to be installed on the roof, the vehicle light emitting assembly can also be installed on other portions of the vehicle, the vehicle light emitting assembly has warning function and enhances the beauty and fashion of the vehicle.

This in mind, the present invention aims at providing a vehicle light emitting assembly.

This is achieved by a vehicle light emitting assembly according to claim 1. The dependent claims pertain to corresponding further developments and improvements.

As will be seen more clearly from the detailed description following below, the claimed vehicle light emitting assembly a plurality of light guide plates, each light guide plate comprises a light emitting surface, the plurality of light guide plates being combined into a hollow pyramidal structure, and the hollow pyramidal structure having a polygonal bottom surface shape, at least one light source element disposed at one terminal of the hollow pyramidal structure, and a shell structure disposed outside of the hollow pyramidal structure and the light source element, and the shell structure is disposed on an outer surface of a vehicle.

In the following, the invention is further illustrated by way of example, taking reference to the accompanying drawings. Thereof:
FIG.1 shows a schematic diagram of the vehicle light emitting assembly according to a preferred embodiment of the present invention.
FIG.2 is a schematic view showing the structure of a light source element according to a preferred embodiment of the present invention.
FIG.3 is a cross-sectional view of a light guide plate and a light source element according to the present invention.
Fig. 4 is a sectional view of the vehicle light emitting assembly of the present invention.
FIG. 5 is a flow chart showing the operation mode of the light emitting assembly of the present invention.
FIG. 6 illustrates other possible installation positions of the light emitting assembly on a car.

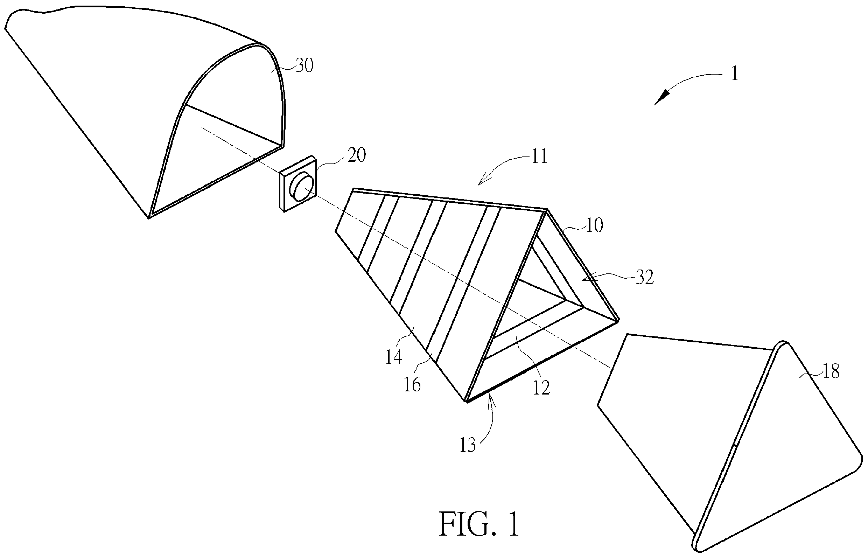

Referring to FIG. 1, a vehicle light emitting assembly 1 of the present invention includes a hollow pyramidal structure 11 having a plurality of light guide plates 10, a light source element 20 and a shell structure 30. In the present embodiment, three light guide plates 10 constitutes the hollow pyramidal structure 11, each of the light guide plates 10 is an equilateral trapezoid in shape to form a hollow triangular pyramid structure. The light source element 20 is disposed on one side of the hollow pyramidal structure 11, preferably near the tip end of the hollow pyramidal structure 11. The shell structure 30 covers the hollow pyramidal structure 11 and the light source element 20. The shell structure 30 may have a streamlined structure. The light guide plate 10 is a flat plate structure and is made of transparent plastic (such as PC or other suitable transparent material). Each of the light guide plates 10 includes a light emitting surface 12 and a reflection surface 14. The light emitting surface 12 is disposed toward the internal spacer of the hollow pyramidal structure 11. The reflection surface 14 is disposed toward the outer surface of the hollow pyramidal structure 11. The reflection surface 14 may be selectively printed with a reflecting material layer 16, such as a white or other color ink layer, and the light emitting surface 12 is a flat surface. However, the present invention is not limited thereto. In other embodiments of the present invention, the light emitting surface 12 of the light guide plate 10 may also include other suitable shapes, such as an arc, it is also be within the scope of the present invention.

In addition, in this embodiment, in order to combine the three light guide plates 10 to form the hollow pyramidal structure 11, a fixing device 18 may be provided. The fixing device 18 is made of a transparent material and has a triangular pyramid shape, and preferably has a bottom surface. The light guide plate 10 can be adhered to the three outer surfaces of the fixing device 18 by means of a transparent adhesive or the like. In this way, the three light guide plates 10 can form a solid hollow pyramidal structure 11, and the bottom surface of the fixing device 18 can serve as a protective cover, preventing the light source element 20 is destroyed by rainwater, wind or dust from outside. However, the present invention is not limited to include the fixing device 18. In other embodiments, the sidewalls of the light guide plates 10 may be directly adhered to each other, and the fixing device 18 is omitted. It is also within the scope of the present invention.

In the above embodiment, the three light guide plates 10 are combined to form the hollow pyramidal structure 11. Therefore, the bottom surface shape 13 of the hollow pyramidal structure 11 is triangular, but the present invention is not limited thereto. In other embodiments, more than three light guide plates may be combined with each other to form a hollow pyramidal structure 11. Therefore, the bottom surface shape of the hollow pyramidal structure 11 may be a rectangle, a pentagon, or other polygons, which are all within the scope of the present invention.

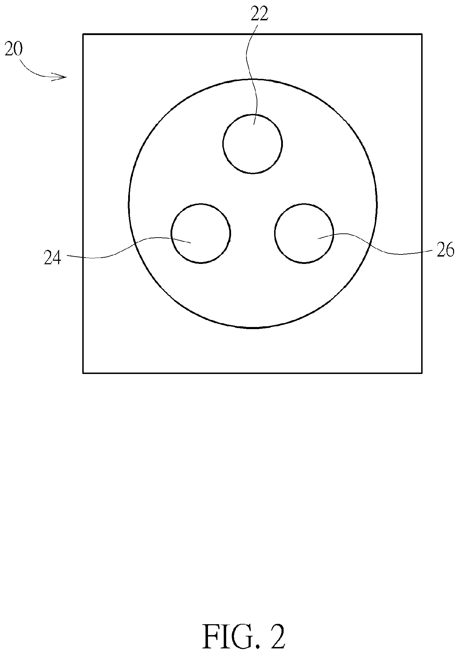

Please refer to FIG. 2, the light source element 20 is a light-emitting element. In this embodiment, the light source element 20 comprises a light emitting component comprising a red light emitting diode (red LED) 22, a blue light emitting diode (blue LED) 24 and a green light emitting diode (green LED) 26. In addition, a control module (not shown) may be included, electrically connected to the light source element 20 for transmitting appropriate signals to the light source element 20, so as to switch light source element 20 or to adjust the colors of the light source element 20. It should be noticed that the light source element of the present invention is not limited to being composed of light-emitting diodes of three colors of red, blue and green. It is also within the scope of the present disclosure that a single color or a combination of other colors is also included.

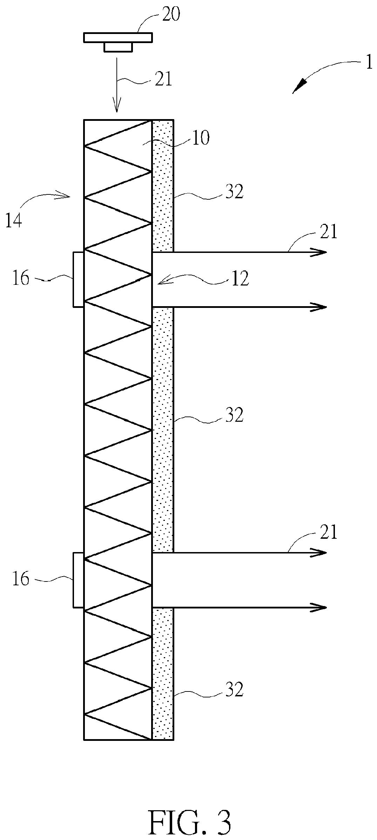

FIG. 3 is a cross-sectional view of one light guide plate 10 of the present invention. As shown in FIG. 3, after the light source element 20 emits a light 21, the light 21 enters the light guide plate 10 and the light 21 is reflected multiple times. The reflecting material layer 16 disposed on the reflection surface 14 of the light guide plate 10 effectively dissipates the reflected light 21. Therefore, after multiple reflections and scattering, the light 21 will be uniformly emitted from the light emitting surface 12. In appearance, the light 21 emitted from the light emitting surface 12 is more uniform and gentle than the light 21 emitted from the light source element 20 at beginning, and the light 21 is emitted to the entire light guide plate 10. In other words, only one light source elements 20 is needed to make all the light guide plates 10 have the light-emitting effect, so that the manufacturing cost of the elements can be reduced.

In addition, in some embodiments, referring to FIG. 3, a patterned black ink layer 32 may be formed on the light emitting surface 12, the patterned black ink layer 32 partially covers the light emitting surface 12. Therefore, the light 21 emitted from the light emitting surface 12 will only be emitted from the area not covered by the patterned black ink layer 32. Taking this embodiment as an example, and please refer to FIG. 1 and FIG. 3. The patterned black ink layer 32 has a plurality of strips arranged in parallel with each other. Therefore, the light rays 21 are emitted from the gaps between the patterned black ink layers 32. From the appearance, the light rays 21 will be shown as a plurality of strips arranged in parallel with each other. Preferably, the position of the reflecting material layer 16 will correspond to the gaps of the patterned black ink layer 32, to enhance the light reflection effect. In addition, the present invention does not limit the pattern shape of the patterned black ink layer 32. For example, the pattern of the patterned black ink layer 32 may include a plurality of strip patterns arranged in parallel, a plurality of circular patterns, a plurality of square patterns, a plurality of triangle patterns or a plurality of irregular patterns, and even the user can customize the pattern of the patterned black ink layer 32 to achieve the purpose of adjusting the light emitting pattern and emit light such as a logo pattern.

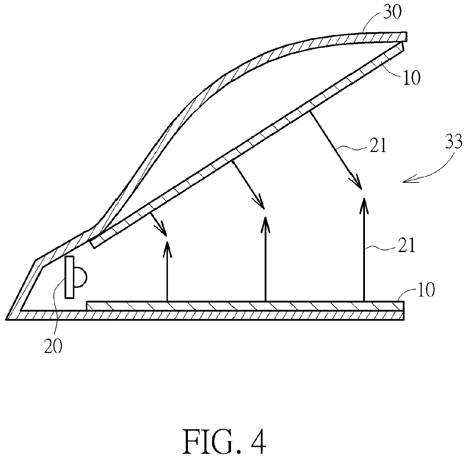

Except for the light guide plates 10 and the light source element 20, the vehicle light emitting assembly 1 further includes a shell structure 30 for accommodating the light guide plates 10 and the light source element 20. Referring to FIG. 4, the shell structure 30 has an opening 33 corresponding to the bottom surface of the hollow pyramidal structure 11. Therefore, the light 21 emitted will be emitted from the opening 33 of the shell structure 30. However, since the light guide plates 10 of the present invention form the hollow pyramidal structure 11, the light emitted from the light emitting surface 12 does not parallel to the opening 33. In other words, when an observer looks to the opening 33, the eyes do not feel dazzling by direct light. The vehicle light emitting assembly 1 of the present invention can be installed on various parts of a vehicle through the shell structure 30. For example, the vehicle light emitting assembly is fixed on the appearance of the vehicle by means of sticking or screw drilling. In addition, although the fixing device 18 is not shown in FIG. 4, the cross-sectional view including the fixing device should also be within the scope of the present invention.

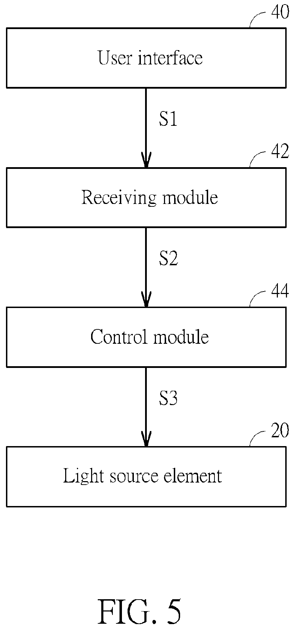

FIG. 5 is a flow chart showing the operation mode of the light emitting assembly of the present invention. In a preferred embodiment of the present invention, a user interface 40 is provided, for example, an application on a mobile phone, a remote control or an internal control system of a vehicle, a signal S1 is sent by the user interface 40 and transmitted to a receiving module 42 of the vehicle light emitting assembly 1, after the receiving module 42 received the signal S1, the receiving module 42 sends a signal S2 to a control module 44 of the vehicle light emitting assembly 1, and then the control module 44 sends a signal S3 to the light source element 20 of the vehicle light emitting assembly 1, to control the laser switching, colors and other parameters of the vehicle light emitting assembly 1. The above-mentioned receiving module 42 and the control module 44 are such as control chips, preferably directly connected to the light source element 20. Besides, the signal S1 is preferably a wireless signal (e.g., bluetooth transmission), but the present invention is not limited thereto.

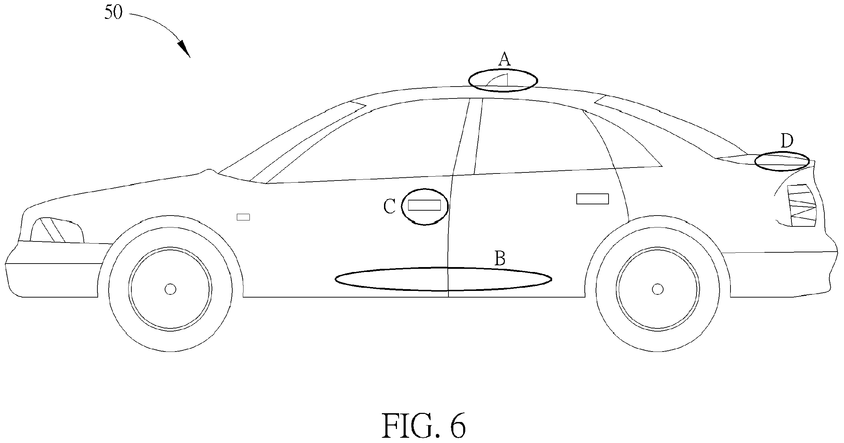

In the invention, the vehicle light emitting assembly 1 is preferably installed on the roof of the vehicle and is combined with the structure of a shark fin antenna. It not only increases the appearance and enhances the radio waves, the vehicle light emitting assembly 1 further provides the function of warning the rear vehicle, and to help users to quickly find the vehicle location in a large parking lot or in heavy rain. The present invention is not limited to mount the light emitting assembly only on the roof of a car. The vehicle light emitting assembly 1 of the present invention can be applied to various mobile vehicles such as automobiles, motorcycles, bicycles and the like. In the case of a car, for example, it is not limited to being mounted on a car roof. Please refer to FIG. 6, which illustrates other possible installation positions of the light emitting assembly of the present invention on a car. As shown in FIG. 6, the light emitting assembly of the present invention may be installed in the vehicle roof portion A of a vehicle 50, the lower spoiler portion B, the outer car handle portion C, or the rear portion D, and other suitable positions includes the side lower spoiler portion, the vehicle rear lower spoiler portion, or the car trunk portion. When the light emitting assembly is installed on other parts of the car, it not only increases the appearance, and also has other functions. For example, when the light emitting assembly is installed on the lower spoiler portion B or on the outer car handle portion C, it may be used as an open door warning light for warning other people, to prevent the motorcycle rider or the bicycle rider hit the door.

In summary, one feature of the present invention is to provide a vehicle light emitting assembly having a streamline shell structure like a shark fin, mounted on a vehicle roof or other parts of a vehicle body. When installed on the vehicle, the light emitting assembly emits light. In addition, by the user's controlling, the switching of the light and the color of the light can be adjusted, to warn the rear vehicle and to enhance the appearance of the vehicle. In addition, the light will not be emitted directly to outside, so the light emitting assembly will not make other drivers uncomfortable.

## Claims

1. A vehicle light emitting assembly (1), **characterized by**:
a plurality of light guide plates (10), each light guide plate (10) comprises a light emitting surface (12), the plurality of light guide plates (10) being combined into a hollow pyramidal structure (11), and the hollow pyramidal structure (11) having a polygonal bottom surface shape (13);
at least one light source element (20) disposed at one terminal of the hollow pyramidal structure (11); and
a shell structure (30) disposed outside of the hollow pyramidal structure (11) and the light source element (20), and the shell structure (30) is disposed on an outer surface of a vehicle (50).

2. The vehicle light emitting assembly of claim 1, **characterized in that** the light source element (20) comprises a light emitting component comprising a red light emitting diode (22), a blue light emitting diode (24) and a green light emitting diode (26).

3. The vehicle light emitting assembly of claim 1, further **characterized by** a black patterned ink layer (32) covering the light emitting surface (12) of each light guide plate (10).

4. The vehicle light emitting assembly of claim 3, **characterized in that** black patterned ink layer (32) comprises a plurality of strip patterns arranged in parallel, a plurality of circular patterns, a plurality of square patterns, a plurality of triangular patterns or a plurality of irregular patterns.

5. The vehicle light emitting assembly of claim 1, **characterized in that** the polygonal bottom surface shape (13) of the hollow pyramidal structure includes triangle, quadrangle, pentagon, or other polygons.

6. The vehicle light emitting assembly of claim 1, **characterized in that** a position for installing the shell structure (30) comprises a vehicle roof portion (A), a lower spoiler portion (B), an outer car handle portion (C), a side lower spoiler portion, a rear spoiler portion (D) and a car trunk portion.

7. The vehicle light emitting assembly of claim 1, further **characterized by** a control module (44) electrically connected to the light source element (20).

8. The vehicle light emitting assembly of claim 1, **characterized in that** each of the light guide plates (10) comprises a reflection surface (14) opposite to the light emitting surface (12), and a reflecting material layer (16) is disposed on the reflection surface (14).

9. The vehicle light emitting assembly of claim 1, further **characterized by** a fixing device (18), the fixing device (18) comprises a plurality of outer surfaces, and wherein the plurality of light guide plates (10) are adhered to the plurality of outer surfaces of the fixing device (18).
